# EUROPEAN PATENT APPLICATION

(11) **EP 3 660 209 A1**
(43) Date of publication of application: **03.06.2020**
(21) Application number: 18837792.3
(22) Date of filing: 11.07.2018
(51) Int. Cl.: D07B 1/02, C08J 5/04, C08K 7/06, C08L 61/14, C08L 71/12, C08L 81/02, C08L 101/00, D07B 1/16, E04C 5/07

(54) **HIGH STRENGTH FIBER COMPOSITE MATERIAL CABLE**

(30) Priority: 24.07.2017 JP 2017142379
(71) Applicant: Tokyo Rope Manufacturing Co., Ltd., Tokyo 103-8306 (JP); Kensyu & Co., Ltd., Itabashi-ku Tokyo 174-0075 (JP)
(72) Inventor: YAMAMOTO Yukito, Tokyo 103-8306 (JP); KATAYAMA Takuya, Tokyo 103-8306 (JP); HACHISUKA Shunji, Tokyo 103-8306 (JP); KURACHI Yasuo, Tokyo 174-0075 (JP)
(74) Representative: Käck, Stefan
(86) International application number: PCT/JP2018/026124
(87) International publication number: WO 2019/021818

(57) **Abstract**

An object of the present invention is to sufficiently impregnate a high-strength fiber bundle with a thermoplastic resin without impairing mechanical strength. A high-strength fiber composite cable is produced by impregnating a bundle of carbon fibers with a matrix resin. The matrix resin is obtained by mixing, with a thermoplastic resin such as polyphenylene sulfide, an oligomer having a weight-average molecular weight of less than 10,000 obtained by causing a reaction between an organic compound having a phenolic hydroxyl group and an organic compound having a glycidyl ether group. The matrix resin, which has a viscosity low in comparison with that of the thermoplastic resin serving as a base material, readily impregnates the bundle of carbon fibers with certainty.

## Description

### Technical Field

The present invention relates to a high-strength fiber composite cable.

### Background Art

A high-strength fiber composite cable made by bundling a plurality of elongated high-strength fibers and impregnating them with a resin is high in tensile strength, low in stretchability, light in weight and excels in corrosion resistance and, therefore, is finding wide use in bridges, concrete structures, transmission lines and the like.

From the standpoint of productivity and the like, thermoplastic resin has received attention as a resin for impregnating fiber bundles (for example, refer to WO2001/051730)).

In comparison with thermosetting resins, a thermoplastic resin exhibits low fluidity when melted and it is difficult to impregnate a fiber bundle with such resin. If the impregnation of thermoplastic resin is insufficient, the fibers sever or become entangled, resulting in disordering of the fibers and roughening of the cable surface. Further, if voids develop internally owing to insufficient impregnation of the thermoplastic resin, the tensile strength of the cable declines and so does the quality of the cable.

In order to sufficiently impregnate a fiber bundle with thermoplastic resin, it will suffice to improve the fluidity of the thermoplastic resin. One method of improving the fluidity of thermoplastic resin that has been contemplated is to lower the viscosity of the thermoplastic resin.

In order to lower the viscosity of a thermoplastic resin, it will suffice to lower the molecular weight of the thermoplastic resin. However, lowering the molecular weight of thermoplastic resin also lowers the tensile strength of the high-strength fiber composite cable produced by impregnating the fiber bundle with the resin.

The viscosity of a thermoplastic resin can be also be lowered by mixing a plasticizer with the thermoplastic resin. However, bleed-out (a phenomenon in which the plasticizer emerges from the surface with the passage of time) readily occurs, and this causes poor adhesion when the high-strength fiber composite cable is used as reinforcement for concrete structures, for example. Furthermore, if there is a large discrepancy between the molecular weight of the thermoplastic resin and the molecular weight of the plasticizer, the plasticizer may not be uniformly dispersed in (miscible with) the thermoplastic resin, causing the formation of large droplets.

### Disclosure of the Invention

An object of the present invention is to sufficiently impregnate a high-strength fiber bundle with a thermoplastic resin, thereby improving the mechanical strength of the cable.

A further object of the present invention is to sufficiently impregnate a high-strength fiber bundle with a thermoplastic resin, thereby providing a high-quality cable.

The present invention provides a high-strength fiber composite cable in which a bundle of high-strength fibers is impregnated with a matrix resin, characterized in that the matrix resin is obtained by mixing, with a thermoplastic resin, an oligomer, which has a weight-average molecular weight of less than 10,000, obtained by causing a reaction between an organic compound having a phenolic hydroxyl group and an organic compound having a glycidyl ether group. The cable, which can also be referred to as a rod, rope or bar or the like, signifies an object whose length in the longitudinal direction is large in comparison with the cross-sectional area. The high-strength fiber bundle constituting the high-strength fiber composite cable typically refers to a bundle of filaments (wires) made of synthetic fibers each having a tensile strength of 20 g/d (259 kg/mm²) or greater.

The matrix resin, which is obtained by mixing, with the thermoplastic resin, the oligomer, which has a weight-average molecular weight of less than 10,000 obtained by causing a reaction between the organic compound having a phenolic hydroxyl group and the organic compound having a glycidyl ether group, has a viscosity low in comparison with that of the thermoplastic resin serving as a base material, and therefore the fluidity thereof is higher than that of the thermoplastic resin serving as the base material. The matrix resin impregnates the bundle of high-strength fibers with certainty and more easily in comparison with the thermoplastic resin serving as the base material.

It was confirmed by tests that the high-strength fiber composite cable produced by impregnating the bundle of high-strength fibers with the matrix resin exhibits improved tensile strength as compared with a conventional high-strength fiber composite cable obtained by impregnating a bundle of high-strength fibers with thermoplastic resin. The matrix resin (the thermoplastic resin contained in the matrix resin) impregnates the bundle of high-strength fibers sufficiently, the high-strength fibers are held firmly, and the occurrence of voids suppressed, by the sufficiently impregnating matrix resin, and it is construed that the tensile strength of the cable is improved as a result. Since the matrix resin lowers the viscosity of the thermoplastic resin while maintaining the properties thereof, it can also be referred to as a low-viscosity thermoplastic resin.

Preferably, the oligomer is limited to a concentration of less than 30 wt% in the matrix resin produced by mixing the oligomer with the thermoplastic resin. This is because it has been confirmed by tests that, if the concentration of the oligomer that occupies the matrix resin is made too high, the tensile strength may fall below that of the conventional cable produced by impregnating a bundle of high-strength fibers with thermoplastic resin. It is believed that this is due to the fact that, by raising the concentration of the oligomer, the concentration of the thermoplastic resin occupying the matrix resin is made relatively weak, resulting in dilution, and the fact that the viscosity of the matrix resin declines excessively, resulting in the matrix resin flowing down from the bundle of high-strength fibers, by way of example. By limiting the concentration of the oligomer to less than 30 wt%, the effect of raising the tensile strength of the cable brought about by sufficiently impregnating the bundle of high-strength fibers with the thermoplastic resin contained in the matrix resin can be made to exceed the effect of reducing the tensile strength of the cable caused by the above-mentioned dilution and downward flow of the matrix resin, and the cable can be made one that exhibits a tensile strength at least equivalent to that of the conventional cable. Though the mechanical strength is equivalent, the occurrence of voids within the cable is diminished with certainty and roughening of the cable surface is inhibited as well. Therefore, a cable having a quality higher than that of the conventional cable is provided.

Polyphenylene sulfide, polyphenylene ether, a fluororesin or an amide group-containing resin can be used as the thermoplastic resin. Carbon fibers can be used as the high-strength fibers.

Preferably, volume content of fiber V_{f} is 30% or more and less than 85%. Due to the interaction between high-strength fibers and the matrix resin including the thermoplastic resin, a tensile strength of the cable can be improved.

A method of manufacturing a high-strength fiber composite cable according to the present invention comprises: heating and melting a matrix resin produced by mixing, with a thermoplastic resin, a predetermined amount of an oligomer, which has a weight-average molecular weight of less than 10,000, obtained by causing a reaction between an organic compound having a phenolic hydroxyl group and an organic compound having glycidyl ether group, the matrix resin having a melt flow rate elevated to 1.5 to 50 times the melt flow rate of the thermoplastic resin; impregnating a bundle of high-strength fibers with the melted matrix resin; and pultrusion-molding the bundle of high-strength fibers impregnated with the matrix resin.

Since the viscosity of the matrix resin is lower than that of the thermoplastic resin, the matrix resin can be made to impregnate the bundle of high-strength fibers sufficiently as compared with the thermoplastic resin. The viscosity of the matrix resin can be adjusted depending upon the amount of oligomer mixed in. By using a matrix resin having a melt flow rate elevated to 1.5 to 50 times the melt flow rate of the thermoplastic resin, the bundling of high-strength fibers can be performed easily and severance of the surface fibers in the pultrusion mold can be prevented as well. Furthermore, a tensile strength at least equivalent to that of the conventional cable can be achieved. A high-strength fiber composite cable of high quality can be manufactured.

### Brief Description of the Drawings

Fig. 1 is a front view of a carbon fiber composite cable;
Fig. 2 is an enlarged cross-sectional view of the carbon fiber composite cable taken along line II-II of Fig. 1;
Fig. 3 is a graph illustrating the result of a tensile strength at break test applied to the carbon fiber composite cable; and
Fig. 4 is a graph illustrating the relationship between concentration of an oligomer contained in a matrix resin and melt flow rate of the matrix resin.

### Best Mode for Carrying Out the Invention

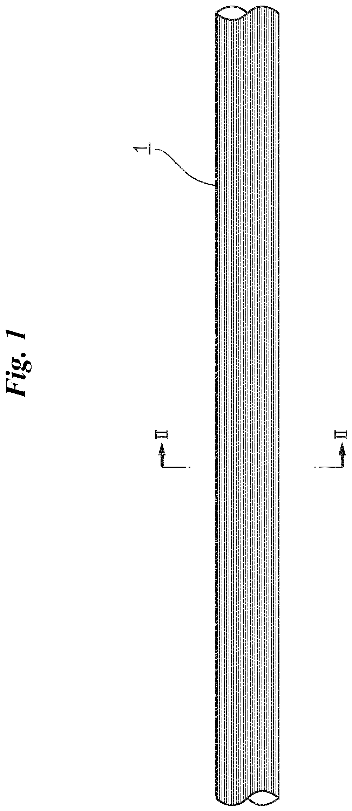

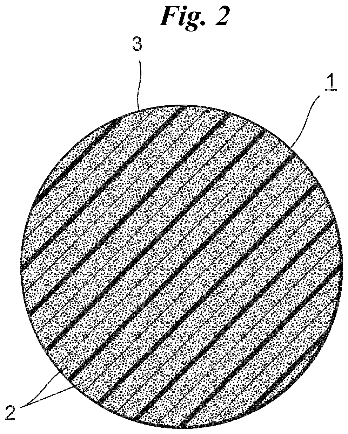

Fig. 1 illustrates the external appearance of a carbon fiber composite cable, and Fig. 2 is an enlarged cross-sectional view of the carbon fiber composite cable taken along line II-II of Fig. 1.

A carbon fiber composite cable 1 is obtained by bundling a large number of elongated carbon fibers 2 into a circular cross-section, impregnating the fibers with a matrix resin 3, and subsequently curing the matrix resin 3. The overall carbon fiber composite cable 1 contains tens of thousands to hundreds of thousands of carbon fibers (monofilaments, filaments) 2. The carbon fiber composite cable 1 is such that the volume ratio of the carbon fibers 2 occupying the overall volume ratio of the cable (volume content of fiber) V_{f} is generally 30% or more and less than 85%.

The carbon fiber composite cable 1 is produced by, for example, bundling about six to seven tows in each of which about 12,000 of the carbon fibers 2 have been bundled, impregnating them with the matrix resin 3 and curing the resin. The carbon fiber composite cable 1 may be one in which all of the carbon fibers 2 contained in the cable are aligned in one direction longitudinally, as illustrated in the drawings, or one in which a plurality of tows are twisted together. The carbon fiber composite cable 1 may be constructed from one tow (core wire) extending in one direction longitudinally, and a plurality of tows (side wires) twisted together around the single tow. The diameter of the carbon fiber composite cable 1 can be adjusted at will depending on the number of carbon fibers 2 that constitute the carbon fiber composite cable 1.

The matrix resin 3 is obtained by mixing an oligomer, which is indicated below, with a thermoplastic resin, thereby lowering the viscosity of the matrix resin 3 below that of the thermoplastic resin, which serves as a base material, and increasing the fluidity thereof. Polyphenylene sulfide, polyphenylene ether, a fluororesin (such as tetrafluoroethylene) or an amide group-containing resin (such as polyamide) can be used as the thermoplastic resin serving as the base material. An oligomer obtained by causing a reaction between an organic compound (a novolac-type phenol resin, for example) having a phenolic hydroxyl group and an organic compound (phenyl glycidyl ether) having a glycidyl ether group can be used as the oligomer to be mixed in.

Since the matrix resin 3 is a solid at room temperature, melts under application of heat and solidifies on cooling, the resin can be referred to as a thermoplastic resin. In terms of at least viscosity, however, it is distinguished from the thermoplastic resin (such as polyphenylene sulfide) serving as the base material used to obtain the matrix resin 3. The viscosity of the thermoplastic resin serving as the base material used to obtain the matrix resin 3 is 10 g/10min to 30 g/10min at the melt flow rate; the viscosity of the matrix resin 3 is much lower than this.

An oligomer having a weight-average molecular weight of less than 10,000 is used as the above-mentioned oligomer. The reason for this is that, if the weight-average molecular weight exceeds 10,000, the miscibility between the thermoplastic resin and oligomer will decline. If importance is attached to miscibility, though, it is preferred to make use of an oligomer having a weight-average molecular weight of less than 5000. The weight-average molecular weight of the oligomer typically can be adjusted by controlling temperature.

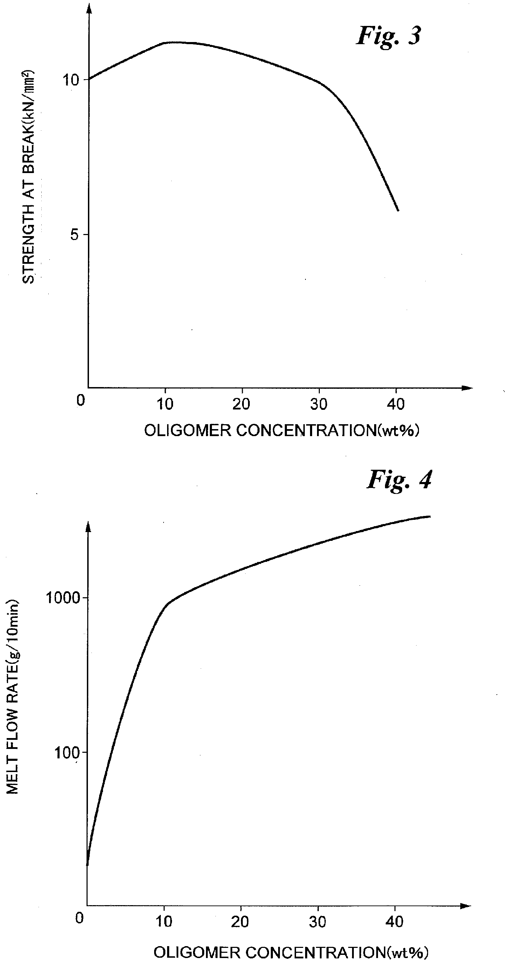

Fig. 3 is a graph illustrating the result of a tensile strength at break test applied to the carbon fiber composite cable 1 (referred to as the "specimen" below), which has a volume content of fiber V_{f} of 50% and a diameter of 2.5 mm. In Fig. 3, the horizontal axis represents the concentration (in wt% units) of the oligomer contained in the matrix resin 3, and the vertical axis represents the tensile strength at break (in kN/mm² units) of the specimen. The specimen was fabricated by producing a carbon fiber bundle obtained by adhering the matrix resin 3 in powdered form to tows made of carbon fibers, bundling six of the tows having the matrix resin 3 adhered thereto in a pultrusion die heated to 330°C, then melting the matrix resin 3 by heating and pultruding the resulting product from the pultrusion die. The matrix resin 3 impregnates the bundle of carbon fibers in the pultrusion die. Instead of causing the powdered matrix resin 3 to adhere to the tows, the matrix resin 3 may be melted in advance and then made to adhere to the tows, or the matrix resin 3 put into the form of fibers may be bundled together with the tows. It should be noted that a carbon fiber composite cable impregnated with a thermoplastic resin with which an oligomer was not mixed was also fabricated and subjected to a tensile strength at break for purposes of comparison.

Fig. 4 is a graph illustrating the relationship between concentration of an oligomer (in wt% units) contained in the matrix resin 3 and melt flow rate (MFR) (in g/10min units) of the matrix resin 3. The melt flow rate was measured in line with the procedure of JIS K7210. The melt flow rate of the thermoplastic resin with which the oligomer was not mixed was measured as well. Melt flow rate can be used as an indicator of the viscosity of a sample; the higher the melt flow rate, the lower the viscosity of the sample (the more readily it flows), whereas the lower the melt flow rate, the higher the viscosity of the sample (the more difficult it is to flow).

Specifically, polyphenylene ether resin (manufactured by Toso K.K.) was used as the thermoplastic resin. Further, adopted as the oligomer was one obtained by reacting a phenyl glycidyl ether (manufactured by Tokyo Chemical Industry K.K.) with a novolac-type phenol resin (manufactured by (Asahi Organic Chemicals K.K.) and then stabilizing the result. When the novolac-type phenol resin and phenyl glycidyl ether were caused to react under predetermined temperature conditions, the weight-average molecular weight of the oligomer could be made less than 10,000.

With reference to the graph of Fig. 4, it was confirmed that the matrix resin 3, obtained by mixing the above-mentioned oligomer with the polyphenylene ether resin, exhibited a reliable increase in melt flow rate (a decrease in viscosity), and that, by increasing the amount of oligomer mixed in, the melt flow rate increased sharply. That is, the viscosity of the matrix resin 3 obtained by mixing the above-mentioned oligomer with the thermoplastic resin declines with certainty.

With reference to the graph of Fig. 3, it was confirmed that, in comparison with a cable obtained by impregnating a bundle of carbon fibers with a thermoplastic resin (oligomer concentration: 0 wt%), tensile strength at break could be improved with the cable obtained by impregnating the bundle of carbon fibers with the matrix resin 3. It is believed that the reason for this, as described with reference to Fig. 4, is that the matrix resin 3 has a viscosity low in comparison with that of the thermoplastic resin and, accordingly, the matrix resin 3 (the thermoplastic resin contained in the matrix resin) can be made to impregnate the bundle of carbon fibers sufficiently. By sufficiently impregnating the bundle of carbon fibers with the matrix resin 3, a large number of the carbon fibers are held firmly by the matrix resin 3 and it is difficult for voids to be produced inside the cable, as a result of which an improvement in the mechanical strength of the cable is achieved. Further, it is believed that, since the tensile strength at break is increased sufficiently, the above-mentioned oligomer at least does not greatly lower the molecular weight of the thermoplastic resin.

With reference to the graph of Fig. 3, it was confirmed that, when the concentration of the oligomer occupying the matrix resin 3 continues to be increased, the tensile strength at break of the specimen turns and starts decreasing and, at a concentration of about 30 wt%, the tensile strength at break of the cable produced from the bundle of carbon fibers impregnated with the matrix resin 3 becomes approximately the same as the tensile strength at break of the conventional cable produced from the bundle of carbon fibers impregnated with the thermoplastic resin (oligomer concentration: 0 wt%). As illustrated in Fig. 4, it is believed that the reason for this is that, by increasing the concentration of the oligomer, the melt flow rate of the matrix resin 3 rises sharply, the amount of the matrix resin 3 that falls from the bundle of carbon fibers increases owing to an excessive decline in the viscosity of the matrix resin 3, and dilution of the thermoplastic resin occurs. In order to bring about a tensile strength at break that is equivalent to or greater than that of the conventional cable, it is necessary to limit the oligomer concentration to less than 30 wt%.

Preferably, the matrix resin 3 used has a melt flow rate that is 1.5 to 50 times that of the thermoplastic resin. By making the melt flow rate of the matrix resin 3 to 1.5 times or more that of thermoplastic resin, severing (roughening) of the carbon fibers 2 on the cable surface in the above-mentioned pultrusion process can be prevented and the bundling process (bundling of multiple tows together and impregnating with the matrix resin 3) can be facilitated. By so arranging it that the melt flow rate of the matrix resin 3 will not be raised by more than 50 times that of the thermoplastic resin, the tensile strength of the cable can be maintained at a strength at least equivalent to that of the conventional cable.

### [Description of Symbols]

- 1: carbon fiber composite cable
- 2: carbon fibers
- 3: matrix resin

## Claims

1. A high-strength fiber composite cable in which a bundle of high-strength fibers is impregnated with a matrix resin, **characterized in that**:
said matrix resin is obtained by mixing, with a thermoplastic resin, an oligomer, which has a weight-average molecular weight of less than 10,000, obtained by causing a reaction between an organic compound having a phenolic hydroxyl group and an organic compound having a glycidyl ether group.

2. A high-strength fiber composite cable according to claim 1, wherein less than 30 wt% of said oligomer is mixed in.

3. A high-strength fiber composite cable according to claim 1 or 2, wherein said thermoplastic resin is polyphenylene sulfide.

4. A high-strength fiber composite cable according to claim 1 or 2, wherein said thermoplastic resin is polyphenylene ether.

5. A high-strength fiber composite cable according to claim 1 or 2, wherein said thermoplastic resin is a fluororesin.

6. A high-strength fiber composite cable according to claim 1 or 2, wherein said thermoplastic resin is an amide group-containing resin.

7. A high-strength fiber composite cable according to any one of claims 1 to 6, wherein said high-strength fibers are carbon fibers.

8. A high-strength fiber composite cable according to any one of claims 1 to 7, wherein volume content of fiber is 30% or more and less than 85%.

9. A method of manufacturing a high-strength fiber composite cable, comprising: heating and melting a matrix resin produced by mixing, with a thermoplastic resin, a predetermined amount of an oligomer, which has a weight-average molecular weight of less than 10,000, obtained by causing a reaction between an organic compound having a phenolic hydroxyl group and an organic compound having glycidyl ether group, the matrix resin having a melt flow rate elevated to 1.5 to 50 times the melt flow rate of the thermoplastic resin; impregnating a bundle of high-strength fibers with the melted matrix resin; and pultrusion-molding the bundle of high-strength fibers impregnated with the matrix resin.
